# EUROPÄISCHE PATENTSCHRIFT

(11) **EP 1 110 599 B1**
(45) Veröffentlichungstag und Bekanntmachung des Hinweises auf die Patenterteilung: **09.04.2003**
(21) Anmeldenummer: 99125804.7
(22) Anmeldetag: 23.12.1999
(51) Int. Cl.: B01F 13/00

(54) **Dynamischer Mischer für zahnärztliche Abdruckmassen**
Dynamic mixer for dental impression pastes
Mélangeur dynamique pour compositions pour empreintes dentaires

(43) Veröffentlichungstag der Anmeldung: 27.06.2001
(73) Patentinhaber: Ernst Mühlbauer GmbH & Co.KG, 25870 Norderfriedrichskoog (DE)
(72) Erfinder: Mühlbauer, Wolfang, Dr., 22609 Hamburg (DE); Hörth, Hans, 21147 Hamburg (DE); Detje, Bernd, 22761 Hamburg (DE); Meyer, Guido, 20259 Hamburg (DE); Meyer, Sven, 21641 Apensen (DE)
(74) Vertreter: Glawe, Delfs, Moll & Partner

(56) Entgegenhaltungen:
- EP-A- 0 492 412
- DE-A- 2 949 369
- DE-C- 4 235 736
- DE-U- 29 705 741
- US-A- 3 302 832

## Beschreibung

Die Erfindung betrifft einen dynamischen Mischer für zähe Massen, insbesondere für Komponenten von zahnärztlichen Abdruckmassen.

Es ist bekannt (EP-B-492412), an ein Gerät zum Ausbringen der zu mischenden Komponenten einen dynamischen Mischer anzuschließen, der am anderen Ende eine Auslaßöffnung für das Gemisch aufweist. Er umfaßt ein Mischrohr, einen darin drehbar gelagerten und antreibbaren Rotor, der mit dem Mischrohr einen im Querschnitt ringförmigen Mischkanal begrenzt, sowie eine Stirnwand mit Einlaßöffnungen, durch die die zu mischenden Komponenten in den Mischkanal gelangen. Der Rotor weist Mischflügel auf, die die den Mischkanal durchströmenden Komponenten miteinander verrühren sollen. Die den Einlaßöffnungen benachbarte Gruppe von Mischflügeln liegt in einem sich konisch verengenden Bereich des Mischkanals. Die zwischen den Flügeln liegenden Räume verengen sich somit in Fließrichtung. Der Mischeffekt dieses bekannten Mischers läßt zu wünschen übrig.

Bekannt ist es ferner (DE-C-4235736, DE-A-2949369), den Rotor an seinem den Einlaßöffnungen benachbarten Ende mit einem mitrotierenden Körper zu versehen, der eine Vielzahl von Kanälen enthält, die die Produktkomponenten in dünne Stränge zerteilen, bevor sie in den weiteren Mischraum gelangen. Sie verursachten ein beträchtlichen Strömungswiderstand, dem keine hinreichende Erhöhung des Mischeffekts entspricht.

Ausgehend von dem oben an erster Stelle genannten Stand der Technik (EP-B-492412) liegt der Erfindung die Aufgabe zugrunde, den Mischeffekt zu verbessern. Sie erreicht dies durch die Merkmale gemäß Anspruch 1. Danach weist der Rotor mehrere Kammern auf, die zu einer Seite hin vollständig oder doch überwiegend offen sind. Diese offenen Seiten sind den Einlaßöffnungen in der Stirnwand zugewandt, so daß die durch diese Öffnungen in den Mischer tretenden Komponenten zunächst von den Kammern aufgenommen werden.

Die Kammern nehmen bei ihrem Vorbeigang an den Einlaßöffnungen abwechselnd Teilmengen der Komponenten auf, die sich in den Kammern übereinanderschichten oder vermengen. Sie treten vorgemischt und/oder im raschen Wechsel durch Ausströmöffnungen in den Mischkanal über, die in einer Platte gebildet sind, die die Kammern abströmseitig begrenzt.

Die Platte bildet die Ausströmöffnungen vorteilhafterweise durch Ausschnitte, durch die die Komponenten gedrückt werden. Diese Ausschnitte können beispielsweise kreisförmig begrenzt oder in Form von Einschnitten, die vorzugsweise als radial angeordnete Schlitze ausgebildet sind, ausgeführt sein. Sie werden zweckmäßigerweise gleichmäßig über die Unterseite der Kammer verteilt, so daß Ablagerungen, die nicht am Strömungsprozeß teilnehmen, minimiert werden.

Die Platte kann eine Ausströmöffnung aber auch dadurch bilden, daß der Außenradius der Platte etwas geringer als der Innenradius des Mischrohrs ist. Die Ausströmöffnung wird dabei von einem Spalt zwischen dem Plattenrand und der Innenfläche des Mischrohrs gebildet. Die durch diesen Spalt gepreßte Masse wird zwischen der bewegten Außenseite der Platte und dem stehenden Mischrohr einer die Mischung fördernden Scherbeanspruchung unterworfen.

Vorteilhafterweise sind mehrere über den Umfang verteilte Kammern durch Wände getrennt. Durch die Verteilung der Kammern über den gesamten Umfang wird erreicht, daß sämtliche Teile der Komponenten den Schichtungsprozeß durchlaufen. Die Wände bewirken erstens eine gleichmäßigere Mischung und zweitens, daß die aus den Einlaßöffnungen tretenden Komponenten in kleinen Portionen mitgerissen werden.

Vorteilhafterweise beträgt die Gesamtfläche der Ausströmöffnungen im Verhältnis zur Querschnittfläche des Mischkanals 10 bis 50%. Sofern die Querschnittfläche des Mischkanals entlang des Mischrohrs variiert, ist die Querschnittfläche des Mischkanals in Höhe der Ausströmöffnungen gemeint. Bei diesen Gröβenverhältnissen hat sich gezeigt, daß beim Auspressen der Komponenten durch die Ausströmöffnungen eine sehr gute Mischung auftritt. Besonders gut ist die Mischung bei einem Verhältnis von 25%.

Vorteilhafterweise sind am Rotor Mischflügel angeordnet, die die Mischung weiter verbessern. Die Mischflügel können dabei in Gruppen angeordnet sein, wobei sich die Mischflügel einer Gruppe jeweils auf derselben Höhe der Drehachse des Rotors befinden. Besonders vorteilhaft für das Mischergebnis ist es, wenn die Abstände der Gruppen entlang der Drehachse des Rotors variieren.

Vorteilhafterweise ist von dem Bereich des Rotors unterhalb der Kammer(n) ein Längenanteil von mindestens 10% und zweckmäßigerweise nicht mehr als 40%, vorzugsweise zwischen 15% und 25%, frei von Mischflügeln. Es hat sich gezeigt, daß in diesem Bereich eine starke Wechselwirkung zwischen der Masse und der Innenwand des Mischrohrs stattfindet. Diese verbessert das Mischergebnis im Vergleich zu einer durchgehenden Anordnung von Mischflügeln.

Vorteilhafterweise sind an der Wand des Mischkanals auf der Höhe des mischflügelfreien Bereichs des Rotors stehende Flügel angeordnet. Dadurch wird die Wechselwirkung zwischen der Innenwand des Mischrohrs und der Masse weiter erhöht.

Vorteilhafterweise sind auf der dem Mischkanal zugewandten Seite der Stirnwand, durch deren Einlaßöffnungen die Komponenten in den Mischkanal gelangen, sogenannte Schikanen angeordnet. Dadurch wird das freie Fließen der Komponenten in dem Bereich zwischen der Stirnwand und den Kanten der die Kammern trennenden Wände verhindert, so daß eine Aushärtung der Komponenten bereits im Bereich der Einlaßöffnungen vermieden wird. Außerdem wird die Mischung verbessert, da die Schikanen die Strömungswege verändern und dadurch unterschiedliche Strömungsgeschwindigkeiten bewirken. Beim Vorhandensein solcher Schikanen streifen die Wände der Kammern die Komponenten nicht an den Wänden der Einlaßöffnungen, sondern an den Schikanen ab.

Die Erfindung wird im folgenden näher unter Bezugnahme auf die Zeichnung erläutert, die ein vorteilhaftes Ausführungsbeispiel veranschaulicht. Es zeigen:
- Fig. 1: einen Längsschnitt durch einen Mischer in vergrößertem Maßstab;
- Fig. 2: eine Draufsicht auf den Rotor mit mehreren Kammern;
- Fig. 3: einen Schnitt durch das Mischrohr in Höhe des mischflügelfreien Bereichs;
- Fig. 4: eine isometrische Ansicht des Rotors;
- Fig. 5: eine Draufsicht auf die Stirnwand aus der Richtung der Auslaßöffnung.

Der Mischer umfaßt ein Mischrohr 1, das an seinem einen Ende auf eine Stirnwand 2 stößt und an seinem anderen Ende eine Auslaßöffnung 6 aufweist. Weiter umfaßt der Mischer einen Rotor 4, dessen Drehachse 19 mit der Längsachse des Mischrohrs 1 zusammenfällt. Der Raum zwischen dem Rotor 4 und dem Mischrohr 1 bildet einen Mischkanal 3 mit ringförmigem Querschnitt. Die Stirnwand 2 weist eine Lagerbuchse 5 für einen Rotorzapfen 7 auf, der mit einem beispielsweise als Innensechskant ausgebildeten Kupplungsansatz herausragt.

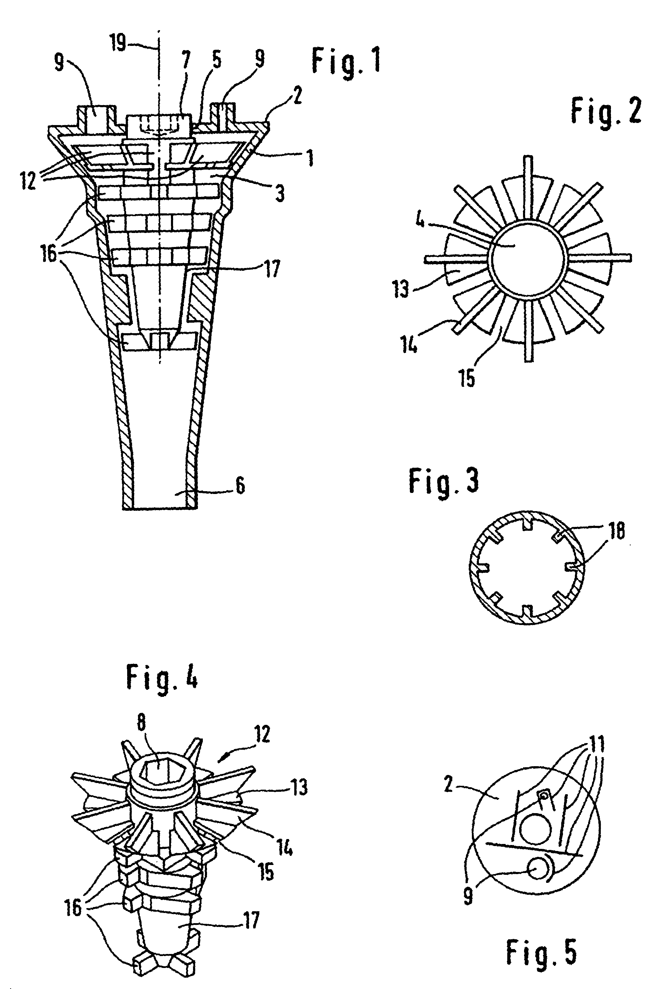

An der Stirnwand 2 sind zwei Einlaßstutzen angeordnet, die dicht mit nicht gezeigten Auslaßstutzen des Ausbringgeräts verbunden werden können. Auf der dem Rotor 4 zugewandten Innenseite der Stirnwand 2 bilden sie zwei Einlaßöffnungen 9, durch die die zu mischenden Komponenten in den Mischer gelangen. Auf der Innenseite der Stirnwand 2 sind sogenannte Schikanen 11 angeordnet (in Fig. 1 nicht gezeigt), bei denen es sich um längliche, teils gerade, teils gebogene Vorsprünge handelt. Sie sind in der Weise angeordnet, daß sie die Einlaßöffnungen 9 voneinander abschirmen. Dadurch soll bewirkt werden, daß die Komponenten nicht bereits in der Nähe der Einlaßöffnungen 9 zusammen kommen und dort aushärten können. An einer der Einlaßöffnungen 9, die kleiner als die andere ausgebildet ist, sind die Schikanen so angeordnet, daß sie diese Öffnungen ganz oder teilweise umschließen, beispielsweise in U-Form. Dadurch wird der Strang der durch diese Einlaßöffnung 9 tretenden Komponente aufgeweitet.

Der Rotor 4 trägt im Anschluß an die Stirnwand 2 bzw. die Schikanen 11 Kammern 12. Diese werden auf ihrer der Stirnwand 2 abgewandten Seite von einer Platte 13 begrenzt. Auf der der Stirnwand 2 zugewandten Seite der Platte 13 sitzen acht Wände 14 auf, die gleichmäßig über den Kreisumfang verteilt sind und sich jeweils von der Oberfläche der Rotorwelle 7 bis zur Innenfläche des Mischrohrs 1 erstrecken und so die Kammern voneinander trennen.

Die Drehbewegung des Rotors 4 erzeugt in Zusammenwirken mit der Stirnwand 2 bzw. den Schikanen 11 eine breitflächige Zusammenführung der Komponenten. Auf diese Weise werden die Kammern 12 abwechselnd mit den Komponenten gefüllt. Dabei kann die gleichmäßige Verteilung der Komponenten in den Kammern von der Aufweitung des dünneren Strangs an der kleineren Einlaßöffnung 9 begünstigt werden. Der Inhalt der Kammern wird anschließend durch acht Ausschnitte 15, die Ausströmöffnungen bilden, in den Mischkanal 3 gepreßt.

Die Ausschnitte 15 sind als radial angeordnete, längliche Schlitze ausgeführt, die sich jeweils von der Oberfläche der Rotorwelle 7 bis zur Außenkante der Platte 13 erstrecken. Zwischen je zwei Wänden 14 befindet sich ein Ausschnitt 15.

Im Mischkanal 3 wird die Masse durch Mischflügel 16, die in vier Gruppen am Rotor 4 angeordnet sind, verrührt. Zwischen der dritten und vierten Gruppe von Mischflügeln 16 befindet sich ein Bereich 17, in dem der Rotor 4 frei von Mischflügeln ist. In diesem Bereich besorgen an der Innenfläche des Mischrohrs 1 angeordnete, stehende Mischflügel 18 die Mischung. Nachdem die Mischung die letzte Gruppe der Mischflügel 16 passiert hat, verläßt sie durch die Auslaßöffnung 6 den Mischkanal 3. Der Rotor kann in einer Zweibackenform mit Anspritzplatte geformt werden, indem die Backen die Mischflügel und die Unterseite der Platte bilden, während die Kammern von der Anspritzplatte geformt werden.

## Patentansprüche

1. Dynamischer Mischer, insbesondere für die Komponenten von zahnärztlichen Abdruckmassen, dessen eines Ende mit einem Ausbringgerät für die Komponenten verbindbar ist und dessen anderes Ende eine Auslaßöffnung (19) für das Gemisch aufweist und der ein Mischrohr (1), einen den im Querschnitt ringförmigen Mischkanal (3) begrenzenden Rotor (4) mit Mischflügeln (14, 16) sowie eine Stirnwand (2) mit Einlaßöffnungen (9) für die Komponenten umfaßt, **dadurch gekennzeichnet, daß** der Rotor (4) der Stirnwand (2) die offenen Seiten von mehreren Kammern (12) zuwendet, die auf ihrer von der Stirnwand (2) abgewandten Seite von einer Platte (13) begrenzt sind und jeweils mindestens eine verengte Ausströmöffnung (15) aufweisen.

2. Dynamischer Mischer nach Anspruch 1, **dadurch gekennzeichnet, daß** die Ausströmöffnung(en) durch Ausschnitte (15) in der Platte (13) gebildet sind.

3. Dynamischer Mischer nach Anspruch 2, **dadurch gekennzeichnet, daß** die Ausschnitte (15) als radial angeordnete Schlitze ausgeführt sind.

4. Dynamischer Mischer nach Anspruch 3, **dadurch gekennzeichnet, daß** die Ausschnitte (15) als kreisförmige Öffnungen ausgeführt sind.

5. Dynamischer Mischer nach einem der Ansprüche 1 bis 4, **dadurch gekennzeichnet, daß** die Abstände von Gruppen von Mischflügeln (16), die sich jeweils auf derselben Höhe der Drehachse (19) des Rotors befinden, entlang der Drehachse (19) variieren.

6. Dynamischer Mischer nach einem der Ansprüche 1 bis 5, **dadurch gekennzeichnet, daß** mehrere über den Umfang verteilte Kammern (12) durch Wände (14) getrennt sind.

7. Dynamischer Mischer nach einem der Ansprüche 1 bis 6, **dadurch gekennzeichnet, daß** die Gesamtfläche der Ausströmöffnungen im Verhältnis zur Querschnittfläche des Mischkanals (3) 10 bis 50% beträgt.

8. Dynamischer Mischer nach Anspruch 7, **dadurch gekennzeichnet, daß** die Gesamtfläche der Ausströmöffnungen im Verhältnis zur Querschnittfläche des Mischkanals (3) 25% beträgt.

9. Dynamischer Mischer nach einem der Ansprüche 1 bis 8, **dadurch gekennzeichnet, daß** von dem Bereich (17) des Rotors (4) unterhalb der Kammern ein Längenanteil von mindestens 10% frei von Mischflügeln ist.

10. Dynamischer Mischer nach Anspruch 9, **dadurch gekennzeichnet, daß** an der Innenfläche des Mischrohrs (1) in dem Bereich (17) des mischflügelfreien Längenanteils des Rotors (4) stehende Mischflügel (18) angeordnet sind.

11. Dynamischer Mischer nach einem der Ansprüche 1 bis 10, **dadurch gekennzeichnet, daß** auf der bzw. den Kammern (12) zugewandten Seite der Stirnwand (2) Schikanen (11) angeordnet sind.

12. Dynamischer Mischer nach Anspruch 11, **dadurch gekennzeichnet, daß** alle oder einige der Schikanen (11) wenigstens eine der Einlaßöffnungen (9) ganz oder teilweise umschließen.

13. Verwendung eines dynamischen Mischers nach einem der Ansprüche 1 bis 12 zum Mischen von Dentalmaterialien.

14. Verwendung eines dynamischen Mischers nach Anspruch 13 zum Mischen von Abformmaterialien.

## Claims

1. Dynamic mixer, in particular for the components of dental impression pastes, one end of which can be connected to a discharge device for the components and the other end of which has an outlet opening (19) for the mixture and which comprises a mixing tube (1), a rotor (4), which defines the mixing duct (3) of an annular cross section and has mixing blades (14, 16), as well as an end wall (2) with inlet openings (9) for the components, **characterised in that** the rotor (4) turns the open sides of a plurality of chambers (12) towards the end wall (2), which chambers are defined on their side remote from the end wall (2) by a plate (13) and in each case have at least one narrowed outflow opening (15).

2. Dynamic mixer according to Claim 1, **characterised in that** the outflow opening(s) is/are formed by cutouts (15) in the plate (13).

3. Dynamic mixer according to Claim 2, **characterised in that** the cutouts (15) are in the form of radially disposed slots.

4. Dynamic mixer according to Claim 3, **characterised in that** the cutouts (15) are in the form of circular openings.

5. Dynamic mixer according to any one of Claims 1 to 4, **characterised in that** the spacings of groups of mixing blades (16), which are in each case located at the same height on the rotational axis (19) of the rotor, vary along the rotational axis (19).

6. Dynamic mixer according to any one of Claims 1 to 5, **characterised in that** a plurality of chambers (12) distributed over the circumference are separated by walls (14).

7. Dynamic mixer according to any one of Claims 1 to 6, **characterised in that** the total area of the outflow openings in relation to the cross-sectional area of the mixing duct (3) is 10 to 50%.

8. Dynamic mixer according to Claim 7, **characterised in that** the total area of the outflow openings in relation to the cross-sectional area of the mixing duct (3) is 25%.

9. Dynamic mixer according to any one of Claims 1 to 8, **characterised in that** a longitudinal proportion of at least 10% of the region (17) of the rotor (4) below the chambers is free of mixing blades.

10. Dynamic mixer according to Claim 9, **characterised in that** upright mixing blades (18) are disposed at the inner surface of the mixing tube (1) in the region (17) of the longitudinal proportion of the rotor (4) which is free of mixing blades.

11. Dynamic mixer according to any one of Claims 1 to 10, **characterised in that** baffles (11) are disposed on the side of the end wall (2) which faces the chamber or chambers (12).

12. Dynamic mixer according to Claim 11, **characterised in that** all or several of the baffles (11) enclose at least one of the inlet openings (9) entirely or partly.

13. Use of a dynamic mixer according to any one of Claims 1 to 12 for mixing dental materials.

14. Use of a dynamic mixer according to Claim 13 for mixing moulding materials.

## Revendications

1. Mélangeur dynamique, en particulier pour les composants de pâtes pour empreintes dentaires, dont une extrémité peut être reliée à un appareil de distribution des composants et dont l'autre extrémité présente une ouverture de sortie (19) pour le mélange, et qui comprend un tube de mélange (1), un rotor (4) délimitant le canal de mélange (3) dont la section transversale est de forme annulaire avec des pales de mélange (14, 16), ainsi qu'une paroi frontale (2) avec des ouvertures d'entrée (9) pour les composants, **caractérisé en ce que** le rotor (4) tourne vers la paroi frontale (2) les côtés ouverts de plusieurs chambres (12) qui, sur leur côté tourné à l'opposé de la paroi frontale (2), sont limitées par une plaque (13) et comportent chacune au moins une ouverture d'écoulement (15) rétrécie.

2. Mélangeur dynamique selon la revendication 1, **caractérisé en ce que** le(les) ouverture(s) d'écoulement sont formées par des découpes (15) de la plaque (13).

3. Mélangeur dynamique selon la revendication 2, **caractérisé en ce que** les découpes (15) sont réalisées sous la forme de fentes disposées radialement.

4. Mélangeur dynamique selon la revendication 3, **caractérisé en ce que** les découpes (15) sont réalisées sous la forme d'ouvertures circulaires.

5. Mélangeur dynamique selon l'une des revendications 1 à 4, **caractérisé en ce que** les distances de groupes de pales de mélange (16), qui se trouvent chacun à la même hauteur que l'axe de rotation (19) du rotor, varient le long de l'axe de rotation (19).

6. Mélangeur dynamique selon l'une des revendications 1 à 5, **caractérisé en ce que** plusieurs chambres (12) réparties sur le pourtour sont séparées par des parois (14).

7. Mélangeur dynamique selon l'une des revendications 1 à 6, **caractérisé en ce que** la surface totale des ouvertures d'écoulement représente de 10 à 50 % de la surface de la section du canal de mélange (3).

8. Mélangeur dynamique selon la revendication 7, **caractérisé en ce que** la surface totale des ouvertures d'écoulement représente 25% de la surface de la section du canal de mélange (3).

9. Mélangeur dynamique selon l'une des revendications 1 à 8, **caractérisé en ce qu'**une partie de la longueur, d'au moins 10 % de la zone (17) du rotor (4) située au-dessous des chambres, ne comporte pas de pales de mélange.

10. Mélangeur dynamique selon la revendication 9, **caractérisé en ce que** sur la surface intérieure du tube de mélange (1), des pales de mélange (18) fixes sont disposées dans la zone (17) de la partie de la longueur sans pales de mélange du rotor (4).

11. Mélangeur dynamique selon l'une des revendications 1 à 10, **caractérisé en ce que** sur le côté de la paroi frontale (2), tourné vers la ou les chambres (12), sont disposées des chicanes (11).

12. Mélangeur dynamique selon la revendication 11, **caractérisé en ce que** toutes ou quelques-unes des chicanes (11) enferment entièrement ou partiellement au moins l'une des ouvertures d'entrée (9).

13. Utilisation d'un mélangeur dynamique selon l'une des revendications 1 à 12 pour mélanger des matières dentaires.

14. Utilisation d'un mélangeur dynamique selon la revendication 13 pour mélanger des matières de moulage.
